# EUROPEAN PATENT APPLICATION

(11) **EP 2 907 574 A1**
(43) Date of publication of application: **19.08.2015**
(21) Application number: 15154789.0
(22) Date of filing: 12.02.2015
(51) Int. Cl.: B01L 3/00

(54) **MICROFLUIDIC SYSTEM WITH VISCOELASTIC FLUID**

(30) Priority: 13.02.2014 US 201461939704 P
(71) Applicant: OWL Biobedical, Inc., Goleta, CA 93117 (US)
(72) Inventor: Foster, John, Santa Barbara, CA California 93110 (US); Grummitt, Daryl, Santa Barbara, CA California 93105 (US); Hoonejani, Mehran, Goleta, CA California 93117 (US); Dunne, John F., Livermore, CA California 94550 (US)
(74) Representative: Kisters, Michael Marcus

(57) **Abstract**

A system and a method are described for separating particles suspended in a fluid stream according to their weight or density, based on their viscoelastic interaction with a suspending fluid. The system may include a particle manipulation stage for manipulating the particles in the sample fluid, an input channel for inputting a sample fluid containing target particles and non-target material, a viscoelastic region that separates particles according to their viscoelastic behavior in the sample fluid upstream of the particle manipulation stage and at least one pickoff channel that removes a subset of the separated particles.

Use of the system for separating, destroying, damaging or debilitating a gender-specific fraction of the components.

## Description

This invention relates to a system and method for manipulating small particles in a microfabricated fluid channel.

Microelectromechanical systems (MEMS) are very small, often moveable structures made on a substrate using surface or bulk lithographic processing techniques, such as those used to manufacture semiconductor devices. MEMS devices may be moveable actuators, sensors, valves, pistons, or switches, for example, with characteristic dimensions of a few microns to hundreds of microns. The actuation means for moveable MEMS devices may be thermal, piezoelectric, electrostatic, or magnetic, for example. A moveable MEMS switch, for example, may be used to connect one or more input terminals to one or more output terminals, all microfabricated on a substrate. MEMS devices may also be made which manipulate particles in a fluid stream passing by or through the MEMS device.

Such a particle manipulation device may be a MEMS movable valve, which can be used as a sorting mechanism for sorting various particles from a fluid stream, such as cells from blood. The particles may be transported to the sorting device within the fluid stream enclosed in a microchannel, which flows under pressure. Upon reaching the MEMS sorting device, the sorting device directs the particles of interest such as a blood stem cell, to a separate receptacle, and directs the remainder of the fluid stream to a waste receptacle.

MEMS-based cell sorter systems have been proposed as an improvement to existing fluorescence-activated cell sorting systems (FACS) known as flow cytometers. Flow cytometers are generally large and expensive systems which sort cells based on a fluorescence signal from a fluorescent tag affixed to the cell of interest. The cells are diluted and suspended in a sheath fluid, and then separated into individual droplets via rapid decompression through a nozzle. After ejection from the nozzle, the droplets are separated into different bins electrostatically, based on the fluorescence signal from the tag. Among the issues with these systems are cell damage or loss of functionality due to the decompression, difficult and costly sterilization procedures between samples, inability to sort sub-populations along different parameters, and substantial training necessary to own, operate and maintain these large, expensive pieces of equipment. For at least these reasons, use of flow cytometers has been restricted to large hospitals and laboratories and the technology has not been accessible to smaller entities.

A MEMS-based cell sorter may have substantial advantages at least in terms of size, cost and complexity over existing FACS flow cytometers. A number of patents have been granted which are directed to such MEMS-based cell sorting devices. For example, U.S. Patent No. U.S. Patent 6,838,056 (the '056 patent) is directed to a MEMS-based cell sorting device, U.S. Patent No. 7,264,972 (the '972 patent) is directed to a micromechanical actuator for a MEMS-based cell sorting device. U.S. Patent No. 7,220,594 (the '594 patent) is directed to optical structures fabricated with a MEMS cell sorting apparatus, and U.S. Patent No. 7,229,838 (the '838 patent) is directed to an actuation mechanism for operating a MEMS-based particle sorting system.

Such particle sorting devices may be examples of a broader category of particle manipulation systems, which may perform some manipulation on the particles passing by in a fluid stream. The stream may include target particles as well as non-target materials. The manipulation may be to image, to count, to identify, alter or destroy the particles. The manipulation may be accomplished by applying a charge, applying a force, applying a field, or applying laser light, to the target particles, for example. Therefore, it should be understood that "manipulation" as used herein, should include non-contact imaging, or counting, of the particle rather than, or in addition to, any actual perturbation of the particle. For example, the manipulation may be to distinguish target particles from non-target materials, separate the target particles, and/or dilute or concentrate the particles from the remainder of the fluid stream.

In any case, the passages between the fluid-containing reservoirs in MEMS particle systems may be quite small, on the order of less than 100 microns in diameter. Because of these small dimensions, fluid flow within the small channels may be dominated by effects not seen in larger systems.

As mentioned previously, many if not all such microfabricated devices use small, microfluidic channels to transport a sample fluid from an upstream input reservoir, past the particle manipulation device, to a downstream output reservoir. The passages between the fluid-containing reservoirs in MEMS particle systems may be quite small, on the order of less than 100 microns in diameter. Because of these small dimensions, fluid flow within the small channels may be dominated by effects not seen in larger systems. Such effects may be used to focus the particles within a particular portion of the microfluidic channel. By reducing the uncertainty in the location of the particle, the measurements of it may be more accurate, thus improving the accuracy of a particle counter such as a flow cytometer, or a particle separator such as a cell sorter.

The object of the invention is to improve the precision of particle manipulation processes, such as cell counting or cell sorting.

The particle manipulation system described here may make use of a viscoelastic fluid to focus the distribution of particles toward the center of the microfluidic channel. The architecture of the system may also separate heavier, or more dense particles from lighter, less dense particles in a separation region of the microfluidic system. The weight profile of a particle population may thus be spread across a dimension of the channel, allowing certain distributions to be sampled or fractionated at the output of the separation region.

Similarly, a soluble molecule, reagent, or additive in the original sample stream may be removed by system. The target particles would thus be concentrated, not unlike the result of centrifugation processes.

In another alternative, a molecule, ligand or functional group may be bound to a target particle of interest, giving that target particle a different hydrodynamic behavior within the fluid flow than non-target, non-bound particles. The target particles may then be preferentially urged to the center of the flow or to the outside of the flow, depending on the hydrodynamic nature of the bound group.

Accordingly, the particle manipulation system may include a particle manipulating device, at least one microfabricated input channel upstream of the particle manipulation device, wherein the microfabricated input channels may include a sample input, a viscoelastic fluid input, a mixing region, a separation region and particle manipulation stage. The viscoelastic fluid input may be used to add a fluid like a sheath fluid to the sample stream, such as a viscoelastic buffer fluid. The mixing region may mix the sheath fluid and/or viscoelastic fluid with the sample stream. The separation region may disperse the particles within the stream based on viscoelastic effects. The particle manipulation stage may be a pickoff region, wherein one or more pickoff channels may select one or more of the fractionated components flowing in the channel. A system and method are also described for manipulating particles of interest selected from the fluid stream. This manipulation may include counting, identifying, imaging, destroying, altering or separating the target particles.

For the embodiment which separates the target particles from the fluid stream, the embodiment may make use of a unique micromechanical actuator which improves the speed, size and manufacturability of the particle sorting system.

These and other features and advantages are described in, or are apparent from, the following detailed description.

### BRIEF DESCRIPTION OF THE DRAWINGS

Various exemplary details are described with reference to the following figures, wherein:
Fig. 1 is a schematic illustration of a microfluidic system using a viscoelastic fluid;
Fig. 2 is a schematic illustration of another microfluidic system using a viscoelastic fluid;
Fig. 3 is a schematic illustration of a microfluidic system using a viscoelastic fluid, wherein a laser is used to disable a selected fraction of the output stream;
Fig. 4 is a schematic illustration of an imaging system using a viscoelastic fluid;
Fig. 5 is a schematic illustration of another imaging system using a viscoelastic fluid;
Fig. 6 is a schematic illustration of a sorting system using a viscoelastic fluid;
Fig. 7a is a schematic illustration of a particle sorting system using a viscoelastic fluid, with a MEMS sorter in a first position; Fig. 7b is a schematic illustration of a particle sorting system using a viscoelastic fluid, with a MEMS sorter in a second position;
Fig. 8a is a schematic illustration of a particle sorting system using a viscoelastic fluid, wherein a target particle is bound with a molecule, ligand or functional group which gives the target particle a different hydrodynamic behavior within the fluid flow;
Fig. 8b is a schematic illustration of a particle sorting system using a viscoelastic fluid, wherein a target particle is bound with a tag which gives the target particle a different hydrodynamic behavior within the fluid flow;
Fig. 9 is a schematic illustration of the system using a mechanism with a viscoelastic fluid.

### DETAILED DESCRIPTION

Viscoelasticity is the property of materials that exhibit both viscous and elastic characteristics when undergoing deformation. Viscous materials, like honey, resist shear flow and strain linearly with time when a stress is applied. Elastic materials strain when stretched and quickly return to their original state once the stress is removed. Viscoelastic materials have elements of both of these properties and, as such, exhibit time-dependent strain. Whereas elasticity is usually the result of bond stretching along crystallographic planes in an ordered solid, viscosity is the result of the diffusion of atoms or molecules inside an amorphous material. (http://en.wikipedia.org/wiki/Viscoelasticity). The systems disclosed here use a viscoelastic fluid as a sheath and/or focusing fluid, wherein the viscoelastic properties focus particles in the center of a microfluidic channel. The focused particles may then pass through an imaging region, or a cell sorting region, or any number of additional particle manipulation stages. The systems may be particularly applicable to biological fluids such as blood, buffer or plasma in which target particles such as T-cells, cancer cells, gametes, or stem cells are suspended. Thus, it may be particularly useful in systems designed to image, count or sort such target particles. Viscoelastic focusing is described further in US Patent Application Publication Serial No. 2010/0178666.

A number of embodiments of particle manipulation systems are described below, which make use of viscoelastic properties of materials. In each embodiment, the particle manipulation system includes a particle manipulation stage which manipulates the particles in some way as they pass by, a viscoelastic region that separates particles according to their viscoelastic behavior in the sample fluid upstream of the particle manipulation stage, and at least one pickoff channel that removes a fraction of at least one of these components.

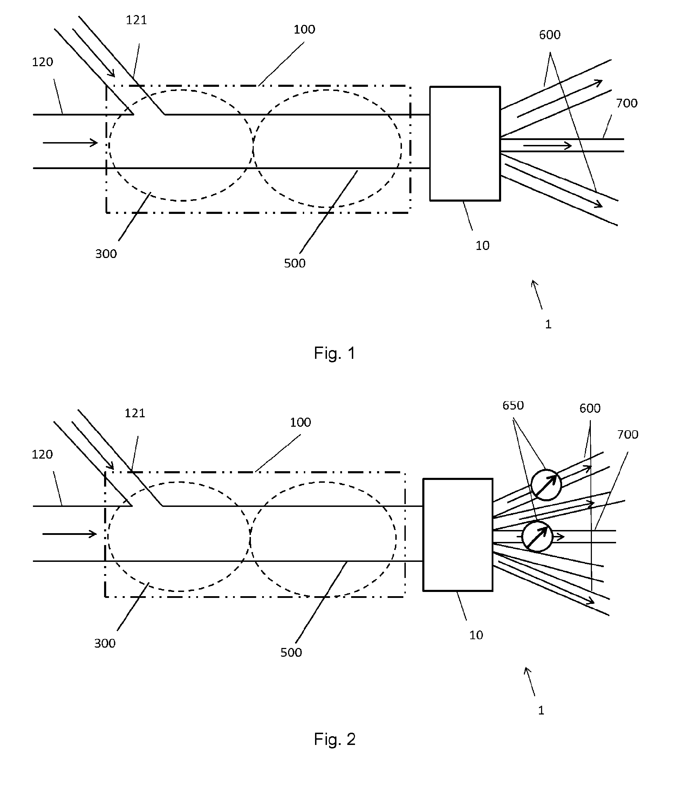

The particle manipulation stage may include at least one of a particle distinguishing means, a particle separation means, a particle dilution means and a particle concentration means, whereby the concentration of particles in the stream is increased or diminished by the removal or addition of another dilutive material such as a buffer. Fig. 1 is a schematic illustration of the generic microfluidic particle manipulation system 1 with a viscoelastic fluid. The microfluidic particle manipulation system 1 may include a sample input 120, that introduces a sample fluid to the microfluidic particle manipulation system 1. The sample fluid may contain a plurality of components, and these components may be particulate, or cellular in nature. Of these components, some may be target particles of particular importance, and others may be non-target material.

The microfluidic particle manipulation system 1 may further include a viscoelastic region 100, which may comprise a mixing region 300 and a separation region 500. At the beginning of viscoelastic region 100, a sample fluid may be input through a sample input microfluidic channel 120. The viscoelastic suspending fluid may be added to the sample fluid by a viscoelastic fluid input channel 121 in the mixing region disposed upstream of the separation region. From the viscoelastic input channel 121, and into the mixing region, the viscoelastic suspending fluid may mix with the sample fluid and dilute it, as well as transform the overall mixture into a viscoelastic fluid.

At the output of the viscoelastic regions is a particle manipulation stage 10. The particle manipulation stage 10 may perform some operation on at least one of the target particles and non-target materials. For example, the particle manipulation stage may irradiate a subset of the components of the sample stream, apply a force, apply a field, or physically separate some components. In Fig. 1, the particle manipulation stage is at least one pickoff channel, which will be described further below. It should be understood that this is but one example of a particle manipulation, of which there are many possibilities. Although a single particle manipulation stage 10 is shown in Fig. 1, it should be understood that there may be multiple particle manipulation stages, arranged serially or in parallel, within the microfluidic particle manipulation system 1.

Among the choices of biocompatible viscoelastic fluids are Bovine Serum Albumin (BSA), Human Serum Albumin (HSA), and PVP (polyvinylpyrrolidone While these fluids are mentioned as examples of possible viscoelastic suspending media, it should be understood that different viscoelastic fluids can be selected and designed to optimize fractionation of specific samples.

The mixing region 300 may include turbulent areas, wherein the fluids are mixed. Alternatively, the fluid injection could be laminar, and particles in the sample driven generally to the center without mixing or turbulence. After the mixing region 300 is a separation region 500, wherein the smaller or debris particles are generally urged into an outer portion (nearer to the channel wall) and the larger particles to an inner portion of the flow. The particle separation region 500 may simply be a length of pipe or tube 500. In any case, a viscoelastic region 100 may include the mixing region 300 and the separation region 500. At the output of viscolelastic region 100, the larger particles may generally be found in the central region, and the smaller particles found in the outer regions of the flow. In this embodiment, the viscoelastic behavior arises from the interaction of the components, or particles, with the viscoelastic suspending fluid in which the particles are suspended.

Accordingly, downstream of the viscoelastic region 100, the stream enters the particle manipulation stage 10. In this embodiment, in the particle manipulation stage 10 the smaller particles may picked off by pick-off channel 600. Pickoff channel 600 may b one or more single channels extending upward and/or downward from the separation channel 500 and/or the particle manipulation stage. It should be understood the centering may be in two dimensions, so that the larger particles are generally confined to the center portion, smaller particles in outer portions (nearer the channel wall) of the flow. Therefore, the pick-off may also be two-dimensional, although for convenience and clarity, only an upper and perhaps a lower pickoff channel 600 are shown in the accompanying figures. The one or more pickoff channels may be disposed either upstream or downstream from the particle manipulation stage which will be described further below.

In addition, separation region 500, pickoff channels 600 and output channel 700, may not have square cross sections. In particular, separation channel 500 may be substantially wider in the lateral dimension than in depth. The exact dimensions of separation region 500 may depend on the amount of centering required. It should also be understood that although a single set of pickoff channels 600 is depicted in Fig. 1, the input sample may be diluted and fractionated into an arbitrary number of downstream channels based on the amount of centering required. The smaller particles removed from the sample stream may be debris, non-attached antibodies after staining, or simply small particles to be removed such as viruses or blood platelets, for example.

Since the larger particles may be found remaining in central channel and preferentially removed by output channel 700, the overall effect of the viscoelastic region 100 is to allow the larger particles to be "washed," while flowing into output channel 700. The "washed" particles have had the smaller debris particles removed by pickoff channels 600. The other effect may be to have the larger particles confined to a streamline closer to the center of flow, thus reducing the spatial variation with respect to a downstream manipulation stage. This mixing, washing and focusing functions taken together therefore occur in the upstream viscoelastic region 100 of the system which may be located upstream of a further downstream particle manipulation stage. The viscoelastic region 100 may therefore provide components that are subjected to at least one of mixing, washing, and focusing prior to the particle manipulation stage.

Fig. 2 is a schematic illustration of another embodiment of the particle manipulation system 1 with viscoelastic fluid. As before, the sample stream may be input in microfluidic channel 120, and the viscoelastic suspending fluid in channel 121. The fluids may again enter a mixing region 300 wherein the fluids are mixed, and a separation region 500, wherein the components are dispersed laterally according to their weight, size or density. In this embodiment, the smaller particles are picked off by multiple pick-off channels 600 downstream of the viscoelastic region 100. The multiple pickoff channels 600 may remove a predefined weight, size or density fraction according to its lateral dispersion across the separation channel 500. Accordingly, in this embodiment, particle populations or components are dispersed laterally according to at least one of their weight, size or their density, and subsequent pickoff channel may remove a predefined fraction according to at least one of its weight, size and its density.

The multiple pickoff channels 600 may be equipped with valves 650 as shown, which may control the flow rates in the respective channels and thus the number of particles removed by pickoff channels 600. Using, for example, valves 650, the channel fluid velocities can be managed to optimize fluid properties and relative populations of particle during processing in the system including the apparatus shown in Fig. 2. The channel velocities also may be managed by collecting and processing images of the fractionation, as will be described further below.

Accordingly, using the embodiment shown in Fig. 2, the input sample may be diluted with viscoelastic suspending fluid and fractionated into an arbitrary number of downstream channels based on the amount of centering required. It may also be possible to dispose a plurality of such viscoelastic separation systems 1 serially, such that the sample is subjected to serial dilution and refractionation.

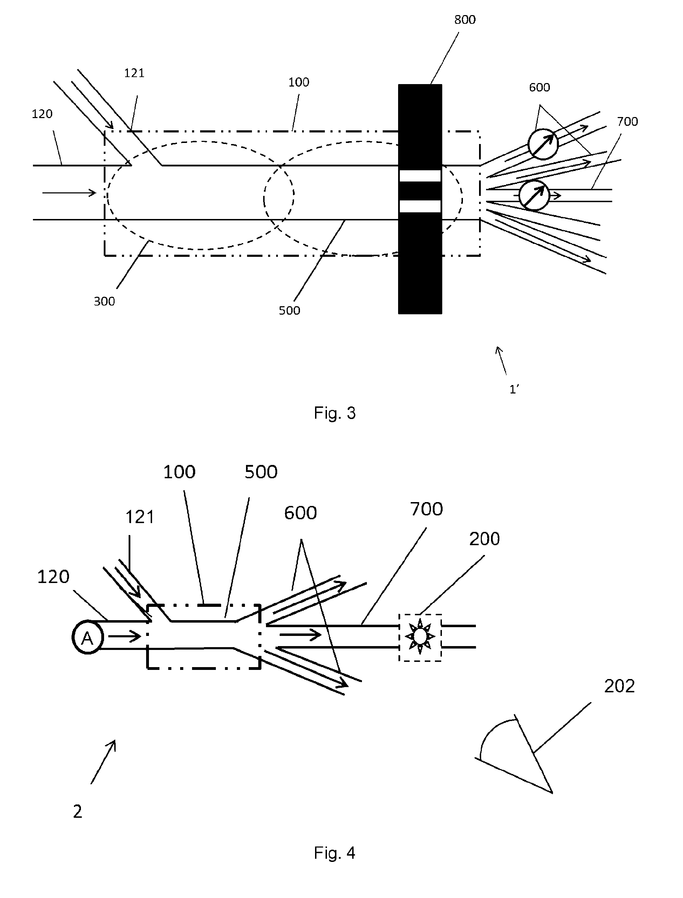

As mentioned previously, the lateral dimension of separation channel 700 may be larger than its depth. This lateral dimension may be used to separate the particulate fractions according to their weight or densities. In some cases, it may be possible then to manipulate a chosen subset of the particles while still in separation channel 500, and such an embodiment is shown in Fig. 3. An exemplary manipulation stage 10 may apply laser light to some portions of the channel, while blocking other portions. An optical shutter, baffle or opaque shield 800 may be used to do this, wherein the optical shutter, baffle or shield 800 is opaque in some lateral areas and transparent in others. By applying the shutter, baffle or shield 800 over the top of separation channel 500, the light may only impinge on certain lateral portions of the flow in separation channel 500. Alternatively, the laser light could be focused into different distinct regions within the channel. Accordingly, the particle manipulation stage may include at least one of a laser, shutter, baffle and an optical shield.

By applying an adequate amount of irradiation or using an ablative laser, the passing particles may be selectively altered, disabled or destroyed. Alternatively, the particles may be tagged with a photoreactive toxin which is activated by the laser irradiation, and subsequently disables or destroys the cell. In yet another alternative, cells can be differentially labeled using a photogenic dye and differential illumination, or cells can be differentially stimulated using a photoactivatable stimulant or expression system and differential illumination. The particle manipulation system 1' with optical shutter, baffle or shield 800 is shown in Fig. 3.

Another objet of the invention is the use of the particle manipulation system as disclosed to separate destroy, damage or debilitate a gender-specific fraction of the components.

One example of the potential application of the system illustrated in Fig. 3 is sex selection of reproductive gametes as components of the sample fluid. It has long been hypothesized that male gametes have different hydrodynamic properties than female gametes. By exploiting this distinction, for example a sample of sperm may be separated laterally in male and female fractions. The male (or female) fraction may then be destroyed, damaged or debilitated by application of laser light to this fraction. The gender-specific fraction may then be used for artificial insemination, in order to produce offspring of the desired gender, as desired for example in the dairy industry.

After separation in the separation channel 500 and fractionation by the one or more pickoff channels 600, the remaining particles flowing in the output channel 700 may then be delivered to the downstream particle manipulation stage described next. The viscoelastic region 100 may therefore provide a washed, focused input to the downstream particle manipulation stage.

One example of a downstream particle manipulation stage is shown in Fig. 4, which is interrogation region 200 in particle manipulation system 2. In interrogation region 200, a particular target particle may be distinguished from non-target material in the sample stream. The distinguishing means may be based on any number of characteristics or attributes that distinguish the target particle from other material in the sample fluid. Although a laser interrogation is described below, it should be understood that other features may be used to distinguish the target particles. For example, the particles may be distinguished by differences in an electrical attribute, a hydrodynamic attribute, a magnetic attribute, an optical attribute, a thermal attribute, mass, or a mechanical attribute of the particle, to name just a few. This list is not meant to be exhaustive, but instead to provide examples of application areas in which the viscoelastic system 1 may be used. Other types of particle manipulations will be described below with respect to Figs.1-7b. Laser interrogation stage 200 may also be a particle imaging stage, wherein data as to the morphology or other attributes of the particle are gathered.

The performance of the laser interrogation region 200 may be improved by the disposition of at least one pickoff channel 600 upstream of the particle manipulation stage, here, the laser interrogation region 200. The pickoff channel may remove soluble molecules, reagents, or additives in the original sample stream, or they may remove debris fragments, non-attached antibodies after staining, excess suspension media, viruses and blood components. The target particles would thus be concentrated, not unlike the result of centrifugation processes. The removal of this non-target material may also remove a source of noise from the laser interrogation region 200, as typically such non-target materials may have substantially different optical properties.

In another alternative, a molecule, ligand or functional group may be bound to a target particle of interest, giving that target particle a different hydrodynamic behavior within the fluid flow than non-target, non-bound particles. The target particles may then be preferentially urged to the center of the flow or to the outside of the flow, depending on the hydrodynamic nature of the bound group. Thus, the at least one pickup channel 600 may remove a subset or fraction of any of these populations of particles.

Accordingly, the particle populations may be dispersed laterally according to their hydrodynamic properties in the viscoelastic region, and the at least one pickoff channel removes a predefined fraction according to its hydrodynamic properties. These hydrodynamic properties may be related to the weight, the size and/or the density of the particle populations, for example.

In one embodiment, the distinguishing means may be based on laser fluorescence. In this technique, the target particle may be a particular cell such as a stem cell, a cancer or tumor cell, a sex gamete, etc., which may be tagged with a fluorescent tag. Such tags are well known in the field and include, for example, fluorescein, Texas Red, phycobiliproteins, cyanine derivatives and rhodamine. While much of this disclosure is directed to this application, it should be understood that the systems and methods described herein are also applicable to other distinguishing mechanisms used to distinguish particles one from another.

If a particle is tagged with a fluorescent tag, it may emit a photon in response to laser excitation, which may be detected by detector 202, which may be, for example, a photomultiplier tube (PMT). Detection of this fluorescent radiation is an indication that a target particle is present in the laser interrogation region 200. If no fluorescent radiation is detected by detector 202, any particle in the region 200 are likely untagged, non-target particles. If the fluorescence is detected, the particle is counted in a running total of such particles, and the system may be an improved flow cytometer, wherein the greater accuracy may result from the viscoelastic focusing within viscoelastic region 100, and the removal of small, interfering particles by pickoff channels 600.

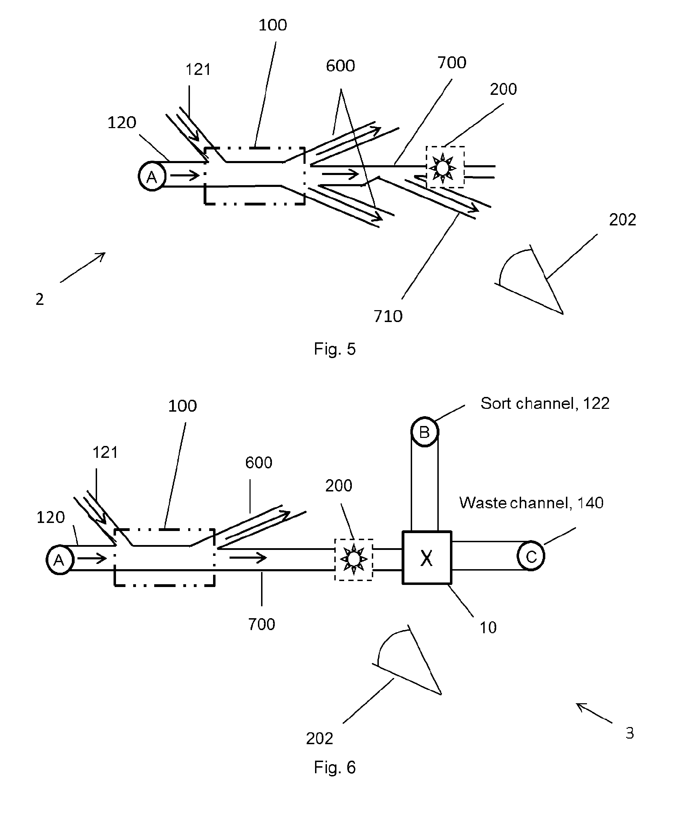

Fig. 5 is s schematic diagram of another embodiment of particle manipulation system using a laser interrogation or particle imaging stage 200. This embodiment may have an additional pickoff channel 710 directly in front of laser interrogation or particle imaging stage 200. Using additional pickoff channels 710 such as that shown, particles having different morphologies or hydrodynamic properties that may otherwise deleteriously affect the signal generated by the laser interrogation or particle imaging stage 200, may be removed. If the particle imaging stage includes a scattered light detector 202 for example, irregularly shaped particles may otherwise be a large source of noise in the system 2.

Fig. 6 is a schematic illustration of another particle manipulation system 2 using microfluidic channels and a viscoelastic focusing region. In this embodiment, the detection of a target particle generates a signal which is used to physically separate the target particles from the other components of the sample stream. In this embodiment therefore, the viscoelastic region 100 may be a component of a cell sorting system 3.

As before, an input channel 120 delivers fluid from an input reservoir to the particle manipulation stage 10. The sample fluid may also be mixed with a viscoelastic suspending fluidentering through channel 121. The fluids may be mixed and the particles separated according to viscoelastic properties in viscoelastic region 100, as in prior embodiments. The sample stream is delivered to particle manipulation stage 10 by output channel 700. However, in Fig. 6, two or more additional channels exit at the output of the manipulation stage 10, forming an intersection point there. One channel 122 may move in one path, a sort path, away from the manipulation stage 10, whereas another channel 140 may move in another path, a waste path, away from manipulation stage 10. Particle manipulation stage 10 may be a microfabricated particle sorter which directs a target particle into a sort channel 122 and allows nontarget material to flow into a waste channel 140.

The particle manipulation stage 10 may sort, or divert, the tagged, target particle into the sort channel 122 and allow the non-tagged, non-target material to flow into the waste channel 140 by using a movable, microfabricated valve, such as that described below.

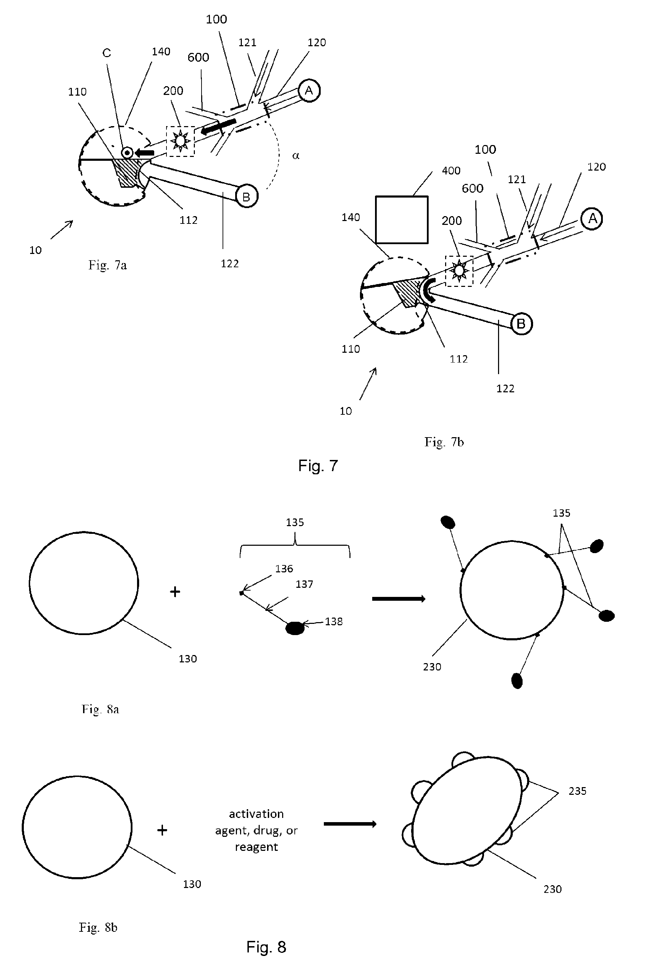

Fig. 7a is a plan view of another particle manipulation system with microfluidic channels and viscoelastic region 100. In this embodiment, the system includes a microfabricated particle sorting stage 10, showing additional details of a novel microfabricated particle valve or microfabricated particle sorting mechanism 10. As such, the system shown in Fig. 7a and 7b is an embodiment of the system shown generically in Fig. 6. Novel particle sorting mechanism 10 is described in greater detail in U.S. Patent Application Serial No. 13/998,095 (the '095 application), filed Oct. 1, 2013 and assigned to the same assignee as the present application. As described in detail in the '095 application, the particle sorting device 10 may have at least one output channel, here waste channel 140, which flows in a direction substantially orthogonal to the fabrication plane of the device 10. More generally, the waste channel 140 may flow out of the plane formed by the other two channels. This plane may be the same plane in which the novel particle sorting mechanism 10 moves.

The viscoelastic focusing system described here may be particularly suited to this type of out-of-plane type of microfabricated valve. In particular, it has been determined that a microfabricated valve with at least one output channel being disposed out-of-the plane of the sample input channel and one other in-plane output channel, may have substantially reduced resistance to fluid flow, as well as an exceedingly small dead volume. The reduced resistance and small dead volume may accommodate the addition of the viscoelastic suspending fluid to the sample stream, while maintaining an adequate flow rate of around 4 ml/hour.The device 10 shown in Fig. 7a is in the quiescent (un-actuated) position. The device 10 may include a microfabricated fluidic valve or movable member 110 and a number of microfabricated fluidic channels 120, 122 and 140. The fluidic valve 110 and microfabricated fluidic channels 120, and 122 may be formed in a suitable substrate, such as a silicon substrate, using MEMS lithographic fabrication techniques as described in greater detail below and in the '095 application. The fabrication substrate may have a fabrication plane in which the device is formed and the movable member 110 may move in this plane.

A sample stream may be introduced to the microfabricated fluidic valve 110 by a sample input channel 120 from sample reservoir A. The sample stream, being formed in the surface of the fabrication substrate, may flow in the plane of that surface. It should be understood that the structures depicted in the accompanying figures may not be drawn to scale, and in fact, the reservoirs may be far larger than the microfluidic channels. The sample stream contained in sample input channel 120 may contain a mixture of particles, including at least one desired, target particle and a number of other undesired, non-target waste particles. The particles may be suspended in a fluid. For example, the target particle may be a biological material such as a stem cell, a cancer cell, a zygote, a protein, a T-cell, a bacteria, a component of blood, a DNA fragment, for example, suspended in a buffer fluid such as saline or bovine serum albumin (BSA). As mentioned, the input channel 120 may be formed in the same fabrication plane as the valve 110, such that the flow of the fluid is substantially in that plane. The motion of the valve 110 is also within this fabrication plane.

As before, the input channel may be joined by a viscoelastic input channel 121, in which the viscoelastic material is introduced to the sample stream. The mixture then proceeds through viscoelastic region 100, and a subpopulation of particles may be picked off by pickoff channel 600. The remainder may flow to the valve 110 in output channel 700 after passing through a laser interrogation region 200. In laser interrogation region 200, at least one component of the sample fluid may be distinguished from another component.

Comparison of Fig. 1 with Fig. 5 indicates that the pickoff channels 600 may be disposed either upstream or downstream of the particle manipulation stage 10. When disposed as shown in Fig. 5, pickoff channels may serve to remove a fraction of the components of the sample fluid. For example, pickoff channel 600 may remove a fraction of the non-target materials, and/or a fraction of the target particles. The non-target materials may include at least one of debris fragments, non-attached antibodies after staining, excess suspension media, viruses and blood components.

The decision to sort/save or dispose/waste a given particle may be based on any number of distinguishing signals. In one exemplary embodiment, the decision is based on a fluorescence signal emitted by the particle, based on a fluorescent tag affixed to the particle and excited by an illuminating laser, such as that in interrogation region 200. Details as to this detection mechanism are well known in the literature. However, other sorts of distinguishing signals may be anticipated, including scattered light or side scattered light which may be based on the morphology of a particle, or any number of mechanical, chemical, electric or magnetic effects that can identify a particle as being either a target particle, and thus sorted or saved, or an non-target particle and thus rejected or otherwise disposed of.

With the valve 110 in the position shown, the input stream passes unimpeded to an output orifice and channel 140, which may be out of the plane of the input channel 120, and thus out of the fabrication plane of the particle manipulation device 10. Reference C indicates a fluid reservoir and the channel leading thereto from the movable valve 110. This direction of flow from C is out of the paper as indicated in Fig. 7a. That is, the flow is from the input channel 120 and sample input reservoir A to the output orifice 140, from which it flows substantially vertically into output orifice 140. The flow from C is thus substantially orthogonal to the input channel 120, and thus substantially orthogonal to the fabrication plane and the plane of motion of particle manipulation device 10. The flow C into output orifice 140 may therefore be perpendicular to the plane of the paper. More generally, the output channel 140 may not be parallel to the plane of the input channel 120 or sort channel 122, or the fabrication plane of the movable member 110. The pressure differential may be reversed, so that fluid flows in reverse from either B or C back to A.

The output orifice 140 may be a hole formed in the fabrication substrate, or in a covering substrate that is bonded to the fabrication substrate. A relieved area above and below the sorting valve or movable member 110 allows fluid to flow above and below the movable member 110 to output orifice 140. Further, the valve 110 may have a curved diverting surface 112 which can redirect the flow of the input stream into a sort output stream. The contour of the orifice 140 may be such that it overlaps some, but not all, of the input channel 120 and sort channel 122. By having the contour 140 overlap the input channel, and with relieved areas described above, a route exists for the input stream to flow directly into the waste orifice 140 when the movable member or valve 110 is in the un-actuated waste position.

As mentioned previously, the device shown in Fig. 7a is designed to transport nominally 4 ml of fluid/hour from sample input source A to waste orifice C when the valve is in the position shown in Fig. 7a, and forward pressure is applied to A relative to C. Using the design shown in Fig. 7a, the particle manipulation stage 10 may accommodate flow (sample volume + viscoelastic volume) of up to about 10 ml/hour.

Fig. 7b is a plan view of the particle manipulation device 10 in the actuated position. In this position, the movable member or valve 110 is deflected upward into the position shown in Fig. 7b. In this position, the movable member or valve 110 may deflect the target particle into the output channel for collection in a sort reservoir B, rather than waste channel 140.

The output channel 122 may lie in substantially the same plane as the input channel 120, such that the flow within the sort channel 122 is also in substantially the same plane as the flow within the input channel 120. There may be an angle a between the input channel 120 and the sort channel 122. This angle may be any value up to about 90 degrees. In one embodiment, the angle a between the input channel 120 and the sort channel 122 may be about 0, meaning that the flow in the input channel is substantially antiparallel to flow in the sort channel. The flow in the waste channel 140 may be substantially orthogonal to flow in the sample input channel 120 and the sort channel 122. This arrangement may have advantages in terms of minimizing path lengths within the laser interrogation region and reducing resistance to fluid flow and dead volume, as described previously, and so may improve the speed and effectiveness of the device.

Actuation of movable member 110 may arise from a force from force-generating apparatus 400, shown generically in Fig. 7b. In some embodiments, force-generating apparatus 400 may be a magnet or an electromagnet, however, it should be understood that force-generating apparatus 400 may also be electrostatic, piezoelectric, or some other means to exert a force on movable member 110, causing it to move from a first position (Fig. 7a) to a second position (Fig. 7b). If magnetic forces are used, the effect may be enhanced by the inclusion of a permeable magnetic feature, such as a region of inlaid NiFe permalloy, inlaid in the movable member. The inlaid feature may be embedded in movable member 110, such that reference number 110 may refer to the movable member as well as the permeable material inlaid therein. The boundary of the inlaid material generally lies just inside of the boundary of the movable member 110. Details as to the design and fabrication of such an inlaid permeable feature may be found in the '095 application. Magnetic forces arising between this permeable feature and force generating apparatus 400, here an external electromagnet, may produce the motion from the first position (Fig. 7a) to the second position (Fig. 7b).

Accordingly, in the particle manipulation system shown in Figs. 6, 7a and 7b, the particle manipulation stage may comprise a microfabricated particle sorting mechanism 10. This microfabricated particle sorting mechanism 10 may further comprise a plurality of microfabricated fluidic channels, microfabricated particle sorting mechanism comprises a plurality of microfabricated fluidic channels, including an input channel within which a sample fluid flow, a sort channel within which target particles flow, and a waste channel within which non-target materials flow, wherein the input channel and sort channel are disposed substantially in the same plane, and the waste channel is disposed substantially perpendicularly to that plane.

It should be understood that although channel 122 is referred to as the "sort channel" and orifice 140 is referred to as the "waste channel" or "waste orifice", these terms can be interchanged such that the sort stream is directed into the waste orifice 140 and the waste stream is directed into channel 122, without any loss of generality. Similarly, the "input channel" 120 and "sort channel" 122 may be reversed. The terms used to designate the three channels are arbitrary, but the input stream may be diverted by the valve 110 into either of two separate directions, at least one of which does not lie in the same plane as the other two. The term "substantially" when used in reference to an angular direction, i.e. substantially tangent or substantially vertical, should be understood to mean within about 40 degrees of the referenced direction. For example, "substantially orthogonal" to a line should be understood to mean from about 70 degrees to about 110 degrees from the line. The terms "microchannel", "microfabricated channel" and "microfluidic channel" are used interchangeably herein, and refer to a channel containing a fluid flow, and having a characteristic dimension of about 200 microns or less.

In another alternative embodiment, the viscoelastic behavior may arise from the particles themselves, by combining the particles with certain compounds that impart the viscoelastic behavior. These compounds are termed "viscoelastic contrast reagents," and may be a tag, antibody, functional group, molecule, activation agent, drug, reagent or other material which imparts the viscoelastic behavior, rather than or in addition to, the viscoelastic properties of the suspending fluid. When combined with the target particle, the viscoelastic contrast reagent gives the target particle a different hydrodynamic behavior relative to other particles within the fluid flow, such that the target particles are separated from the others in the separation region 500. Two examples of viscoelastic contrast reagents are described below, and illustrated in Figs. 8a and 8b.

Fig. 8a is a schematic illustration of target particle 130 to be used in a particle sorting system, wherein the target particle 130 is bound with an attachment compound 135 which will bind to a particle or a subset of particles suspended in the fluid. The target particle 130 may be a cell of interest such as a stem cell, a T-cell or a cancer cell. The attachment compound 135 may include a molecule, ligand or functional group which gives the target particle 130 a different hydrodynamic behavior within the fluid flow. The attachment compound 135 may have at least three parts: a binding portion 136, a tail portion 137 and a massive portion 138. The binding portion 136 may be an antibody or other cell-specific ligand. The tail portion 137 may be a polymer having an elasticity associated with it. The massive portion 138 may be, for example, a gold nanoparticle which gives the particle additional momentum. Accordingly, the bound particle may have enhanced viscoelasticity, when interacting with the suspending fluid and narrow channels as described above. For example, by tagging the particles as shown in Fig. 8a, the target particles may preferentially be confined to the center portion of the flow, or to the outer areas depending on the properties of the other particles in the sample. A viscoelastic suspending fluid may be used in addition, however, the viscoelastic suspending fluid may not be necessary, as the particle itself 135 may have time-varying hydrodynamic properties by virtue of the elastic tail portion 137 and the massive portion 138.

It should be understood that the attachment compound 135 shown in Fig. 8a is exemplary only, and other attachment structures may be used, which tend to change the hydrodynamic properties of the particle. In particular, any attachment structure may be used which causes an interaction between the particle and the fluid which is time-dependent and has a relaxation time. In this embodiment, the viscoelastic behavior arises from the elastic attachment portion and the mass which are bound to at least a subset of the particles. These features give the particle the time-dependent hydrodynamic behavior characteristic of viscoelastic systems.

Fig. 8b is a schematic illustration of another target particle 130 to be used in a particle sorting system, wherein a target particle interacts with a drug, activation agent or reagent. Once again, the target particle 130 may be a cell such as a stem cell, a T-cell or a cancer cell. The drug, activation agent or reagent may then, in combination with the particle 130, change the particle's hydrodynamic properties. For example, the drug, activation agent or reagent may confer differential viscoelastic behavior on a subset of particles by changing the intrinsic viscoelastic properties of the cells themselves, making them more fluid or less spherical, for example. The drug, activation agent or reagent may bind selectively because the drug is cell specific, or it may bind all and only effect a subset because the downstream effects of the drug are cell specific.

For example, when a subpopulation of cells 230 is responsive to the drug, activation agent or reagent, they may produce structures 235 in response to the drug, activation agent or reagent, as shown schematically in Fig. 8b. These structures 235 may then alter the viscoelastic behavior of this subpopulation relative to the rest of the cell population. These particles or cells 230 may then migrate to a particular lateral area within the flow. The target particles may then be picked off or removed by appropriate placement of the pickoff channels 600 within the lateral flow. As before, a viscoelastic fluid may be used as well, however, the viscoelastic fluid may not be necessary, as the particle itself 230 may have time-varying hydrodynamic properties by virtue of the changes in its shape or hydrodynamic properties as a result of its interaction with the drug, activation agent or reagent.

As an example of the process illustrated in Fig. 8b, the drug, activation agent or reagent might be a lipopolysaccharide (LPS), which is a large molecule consisting of a lipid and a polysaccharide joined by a covalent bond. LPS may activate monocytes but not lymphocytes because it binds several proteins that are present in monocytes and not in lymphocytes. LPS may be used with monocytes in the process illustrated in Fig. 8b, because monocytes may have cellular machinery that is secondary to the binding, but which responds when the monocytes are activated and alters the outer shape of the cells. These changes may then affect the cells' viscoelastic behavior as illustrated in Fig. 8b. Accordingly, the LPS acts not as an extracellular ligand as shown in Fig. 8a, but as a stimulant which therefore changes the viscoelastic properties of monocytes selectively.

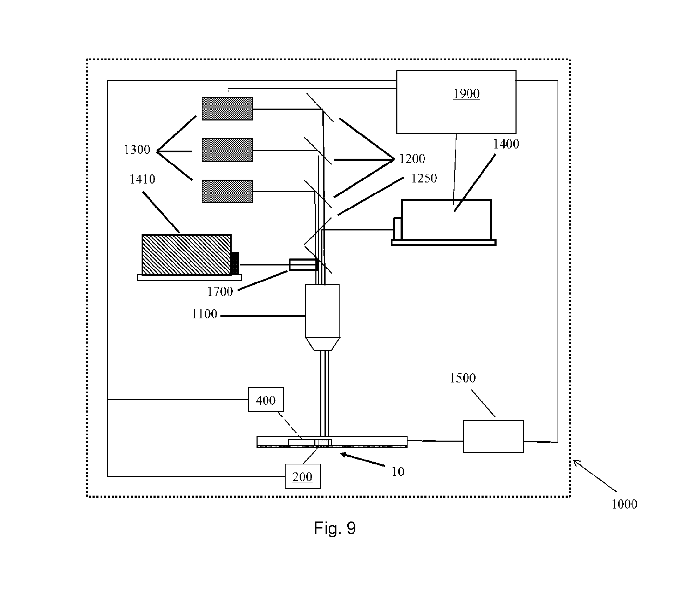

Fig. 9 is a schematic illustration of the particle manipulation system 1000 which may implement the viscoelastic separation region 100 as depicted in any of Figs. 1-7b. What follows is a description of some other possible components of the system and how they interact with the viscoelastic separation channel 100. The system is described with respect to a particle sorting device such as that shown in Fig. 6, 7a and 7b, but may be applicable as well to an imaging system such as shown in Figs. 4 and 5. In particular, Fig. 9 lays out the optical path of the interrogating laser for interrogation region 200, and fluid control of the channels 100-700.

In the normal operation of system 1000, the target particle may be a particular cell, such as a stem cell, or a cancer cell, which has been tagged with a fluorescent marker. This marker emits photons having a particular energy when irradiated with a laser 1400 operating at a predefined wavelength. Accordingly, in this cell sorting system, a laser source 1400 may be directed by a turning mirror 1250 through the detection/collection optics 1100 onto the movable member 110 in the laser interrogation region 200 as was shown in Fig. 3a. The optical axis of the detection/collection optics 1100 and the laser source 1400 may be collinear, at least over a portion of the optical path. Thus, the orientation of the laser application and optical detection along this optical axis may be perpendicular or orthogonal to the substrate fabrication plane, orthogonal to the plane of motion of the movable valve 110 and orthogonal to the flow of the sample fluid through the detection region. To the extent that viscoelastic separation region 500 tends to urge the particles to the middle of the sample stream, the provision of the viscoelastic structure as shown in Figs. 1-7b may reduce the noise level of these measurements.

The fluorescence emitted from the irradiated particles may be shaped by detection/collection optics 1100 and separated by dichroic mirrors 1200 and directed into a bank of photodetectors 1300. A plurality of photodetectors may accommodate multiple wavelengths of emitted light, for multiparametric detection. The signal output by the photodetectors 1300 indicates the presence or absence of the target particle in the laser interrogation region 200. The signal may be delivered to a controller 1900, which manages the relative timing of the components in the particle sorting system 1000, and collects the data. The controller 1900 may be a general purpose computer or a specialized circuit or ASIC. Upon detection of the target particle, a signal is generated by the controller 1900 which energizes the force-generating or flux-generating apparatus 400. The controller 1900 may also provide the fluidic control to the particle manipulation device 10, via one or more pneumatic, hydraulic, piston-based or mechanical force- based mechanisms which are illustrated generically by fluid control means 1500. The rate at which particles are detected may be monitored by the controller 1900, which may then control valves 650 as well as the pressure applied to the input stream at A (Fig. 7a, 7b) relative to B and C. The fluid may be caused to flow in the forward direction (A>B and A>C) or in the reverse direction (B>A and C>A) under the control of controller 1900, via fluid control means 1500.

The force generating apparatus 400 is a device which causes a force to arise in the movable structure 110 itself, causing the motion of the movable structure. This force-generating apparatus 400 may not be directly mechanically coupled to the MEMS particle manipulation device 10, as indicated by the dashed line in Fig. 9. For example, the force-generating apparatus 400 may be a source of magnetic flux which causes a magnetostatic force to arise in an inlaid permeable material in the MEMS movable valve 110 as described previously. Accordingly, flux generating apparatus 400 may be an electromagnet with a magnetic core and windings. This force may pull the movable valve 110 toward the force-generating apparatus 400, opening the sort channel 122 and closing the waste channel 140, as was shown in Figs. 3a, 3b, 4a and 4b. Importantly, the force-generating apparatus 400 may reside in the particle sorting system 1000, rather than in the MEMS particle manipulation device 10. As mentioned previously, this may reduce the cost and complexity of the MEMS particle manipulation device 10, which may be the disposable portion of the system 1000. Another optional laser 1410 may also be included to provide a second optical channel.

In the laser interrogation region 200, the target particle may be distinguished from the other constituents of the fluid sample. The detection means may be a laser 1400 and associated optics, which directs the laser to a spot upstream of the MEMS movable member 110, and generally in laser interrogation region 200.

Upon passing through the detection region 200, a signal is generated by the detector 1300 indicating that a target particle is present in the interrogation region 200. After a known delay, a signal is generated by the controller 1900 which indicates that the sorting gate, i.e. the movable valve 110 is to be opened, in order to separate the target particle which was detected, from the other components in the sample fluid. The movable MEMS valve 110 may comprise permeable magnetic materials, so that the magnetic force may arise in it in the presence of a magnetic field. When the signal is generated by the controller 1900, a force arises in the embedded magnetically permeable material which draws the movable valve toward the force generating apparatus 400. This motion may close off waste channel 140 and redirect the target particle into a sort channel 122. The sorted sample is subsequently collected from a sort reservoir at the end of the sort channel 122, which holds the sorted sample. As mentioned previously, the controller 1900 may also control flow rates based on the rate at which sorting events are recorded.

A fluid control means 1500 may control the direction and velocity of fluid flowing through the channels of the microfabricated particle manipulation system 10 and viscoelastic region 100. The fluid control means may be controlled based on a number of criteria as described above. The fluid control means may include pneumatic, hydraulic, and/or one way valves, and/or may include a piston with a pump and associated fluidic passages. During normal operation, the flow may be controlled by the fluid control means 1500 in a feedback loop with controller 1900 to keep fluid velocity, pressure, or event rate constant, for example. At the end of a sorting operation when the volume of sample to be sorted in nearly exhausted, the controller in concert with the fluid control means may reverse the flow of fluid in the microchannels, thus keeping the passages wet. The fluid control means may also control valves 650 on the pickoff channels 600 and output channel 700, in order to control the purity and yield of the sorted sample.

Accordingly, among the important features of the viscoelastic particle manipulation system are:
- Sample stream may contain particles and undesired constituents. The undesired constituents may be non-attached antibodies after staining, excess suspension media, other solutes and reagents, or simply small particles to be removed such as debris, viruses or blood platelets, etc.
- Viscoelastic fluid may be injected, which serves both to mix with sample and dilute it as well as transform the overall mixture into a viscoelastic fluid
- Alternatively, the fluid injection could be laminar, and particles in sample driven to center without mixing/turbulence
- Particle centering region can be a simply a length of a tube or pipe (typically microfluidic channel) in which large particles will naturally move to the center of flow
- Sample Out pick-off at the end is in the center of the channel, picking up most all of the large particles focused in the central channel, and relatively little other fluid, so the cells have been washed, i.e. diluent, particles and debris have been removed.
- The cells are then also centered at output, which could be useful in the subsequent processing (such as Cytometry or Sorting)
- Viscoelastic fluids include Bovine Serum Albumin (BSA), Human Serum Albumin (HSA), and PVP (polyvinylpyrrolidone)
- Input sample is diluted with viscoelastic fluid and fractionated into an arbitrary number of downstream channels based on the amount of centering
- Sample is subjected to serial dilution and refractionation
- Different viscoelastic fluids can be selected and designed to optimize fractionation of specific samples
- Different contrast reagents can be used to amplify fractionation of specific particles, eg antibody labeling with specific conjugates or stimulants to amplify fractionation
- Channel fluid velocities can be managed to optimize fluid properties during processing
- These channel velocities can be controlled by collecting and processing images of the fractionation

While various details have been described in conjunction with the exemplary implementations outlined above, various alternatives, modifications, variations, improvements, and/or substantial equivalents, whether known or that are or may be presently unforeseen, may become apparent upon reviewing the foregoing disclosure. Accordingly, the exemplary implementations set forth above, are intended to be illustrative, not limiting.

## Claims

1. A particle manipulation system, comprising:
an input channel for inputting a sample fluid, wherein the sample fluid contains a plurality of components; a particle manipulation stage for manipulating at least one of the a plurality of components; and a viscoelastic region,
**characterized in that** the a viscoelastic region separates at least one of the plurality of components according to its viscoelastic behavior in the sample fluid upstream of the particle manipulation stage.

2. A particle manipulation system of claim 1, wherein the particle manipulation stage comprises at least one pickoff channel that removes a fraction of at least one of the components.

3. The particle manipulation system of claim 1 or 2, wherein the viscoelastic region comprises a mixing region and a separation region, and wherein the viscoelastic behavior arises from the interaction of the components with a viscoelastic fluid in which the particles are suspended in the viscoelastic region.

4. The particle manipulation system according to any of the claims 1 to 3, wherein the viscoelastic fluid is added to the sample fluid by a viscoelastic fluid input channel in the mixing region, disposed upstream of the separation region.

5. The particle manipulation system according to any of the claims 1 to 4, wherein the at least one pickoff channel is disposed either upstream or downstream of the particle manipulation stage.

6. The particle manipulation system according to any of the claims 1 to 5, wherein the particle manipulation stage comprises a laser interrogation region wherein at least one component is distinguished from other components, wherein the at least one component is a target particle and the other components are non-target materials.

7. The particle manipulation system according to any of the claims 1 to 6, wherein the particle manipulation stage includes a microfabricated particle sorting mechanism.

8. The particle manipulation system according to any of the claims 1 to 7, wherein the microfabricated particle sorting mechanism comprises a plurality of microfabricated fluidic channels, including an input channel within which a sample fluid flow, a sort channel within which target particles flow, and a waste channel within which non-target materials flow, wherein the input channel and sort channel are disposed substantially in the same plane, and the waste channel is disposed substantially perpendicularly to that plane.

9. The particle manipulation system according to any of the claims 1 to 8, wherein flow in the input channel is substantially antiparallel to flow in the sort channel.

10. The particle manipulation system according to any of the claims 1 to 9, wherein the components are dispersed laterally according to their hydrodynamic properties in the viscoelastic region, and the at least one pickoff channel removes a predefined fraction of the components according to its hydrodynamic properties.

11. The particle manipulation system according to any of the claims 1 to 10, wherein the at least one pickoff channel removes at least a fraction of the non-target materials.

12. The particle manipulation according to any of the claims 1 to 11, wherein the fraction of the non-target materials include at least one of debris fragments, non-attached antibodies after staining, excess suspension media, viruses and blood components.

13. The particle manipulation system according to any of the claims 1 to 12, wherein the viscoelastic behavior arises from a viscoelastic contrast reagent coupled to at least one component, which gives the component a different hydrodynamic behavior relative to other components.

14. The particle manipulation system according to any of the claims 1 to 13, wherein the particle manipulation stage comprises at least one of a laser, a shutter, a baffle, an opaque shield, a particle distinguishing means, a particle separation means, a particle dilution means and a particle concentration means.

15. Use of the particle manipulation system according to any of the claims 1 to 14 for separating, destroying, damaging or debilitating a gender-specific fraction of the components.
